**Europäisches Patentamt**

**European Patent Office**

**Office européen des brevets**

(19)

(11) Numéro de publication: **0 053 064**
**B1**

(12) # FASCICULE DE BREVET EUROPEEN

(45) Date de publication du fascicule du brevet:
**03.07.85**

(51) Int. Cl.⁴: **H 04 N 7/13**

(21) Numéro de dépôt: **81401800.8**

(22) Date de dépôt: **16.11.81**

(54) **Système de transmission numérique à codage adaptatif d'informations analogiques échantillonnées et transformées par transformation orthogonale.**

(30) Priorité: **17.11.80 FR 8024603**

(43) Date de publication de la demande:
**02.06.82 Bulletin 82/22**

(45) Mention de la délivrance du brevet:
**03.07.85 Bulletin 85/27**

(84) Etats contractants désignés:
**DE GB NL**

(56) Documents cités:
**GB - A - 2 000 663**
**US - A - 4 189 748**

**IEEE TRANSACTIONS ON COMMUNICATION TECHNOLOGY, vol. COM-19, no. 6, décembre 1971 New York, US M. TASTO et al.: "Image coding by adaptive block quantization" pages 957-972**
**ICC'79 CONFERENCE RECORD, INTERNATIONAL CONFERENCE ON COMMUNICATIONS, 10-14 juin 1979, vol. 2, 1979 IEEE Boston, US O.R. MITCHELL et al.: "Adaptive transform image coding for human analysis", pages 23.2, 1-5**

(73) Titulaire: **L'Etat Français, représenté par le Ministre des P.T.T. (Centre National d'Etudes des Télécommunications), 38-40 rue du Général Leclerc, F-92131 Issy-les-Moulineaux (FR)**
Titulaire: **Etablissement Public de Diffusion dit "Télédiffusion de France", 21-27 rue Barbès, F-92120 Montrouge (FR)**

(72) Inventeur: **Motsch, Roger, 12, rue des Fontenelles Chavagne, F-35310 Mordelles (FR)**
Inventeur: **Lolivier, Germain, 3, Square de Tanouarn, F-35000 Rennes (FR)**
Inventeur: **Roussel épouse Chassaing, Françoise, 24, rue des Bersandières, F-35127 La Chapelle les Fougeretz (FR)**

(74) Mandataire: **Le Guen, Louis François, Cabinet Louis Le Guen 1, avenue Edouard VII B.P. 91, F-35802 Dinard Cédex (FR)**

# Description

La présente invention concerne les systèmes de transmission numérique à codage adaptatif d'informations analogiques échantillonnées dont les échantillons ont subi une transformation orthogonale. Elle trouve une application notamment en télévision numérique dans le codage à réduction de débit en vue de la transmission, à un débit de 34 Mégabits par seconde, de l'information relative à une image de télévision. Toutefois, son utilisation n'est pas limitée à cette application. En effet, elle peut également s'appliquer au codage et à la transmission du son de haute fidélité.

On rappelle que les voies de transmission numériques normalisées par le CCITT et susceptibles d'être utilisées pour véhiculer les signaux d'images de télévision ou autres correspondent à des débits de 140 ou de 34 Mbit/s (ce dernier débit correspondant au 3ème niveau hiérarchique recommandé par le CCITT). Sur le premier type de voies de transmission on peut transmettre le signal sans traitement supplémentaire car le débit disponible est égal à celui du signal numérisé. Pour pouvoir utiliser le second type de voies de transmission, dont l'intérêt économique est évident, il faut utiliser des systèmes de codage à réduction de débit.

Il est connu d'obtenir une réduction de débit en utilisant une transformation orthogonale, puis en codant les coefficients transformés en utilisant un codage par seuil. Le seuil de codage est de préférence adaptatif. En pratique, on effectue donc deux types de traitement sur le signal d'image échantillonné, puis numérisé. La première opération consiste à prendre dans l'image un ensemble de points (matrice «image») et à lui appliquer une transformation orthogonale de telle sorte que l'ensemble initial, où les points sont statistiquement dépendants, soit transformé en un ensemble de coefficients plus indépendants (matrice «transformée»). La seconde opération concerne le codage proprement dit qui est effectué, non pas dans l'espace image, mais dans l'espace transformé, en quantifiant selon une loi donnée les coefficients ainsi calculés. Dans cette dernière opération, on peut faire intervenir des propriétés psychovisuelles pour déterminer la loi de quantification et le nombre d'éléments binaires à utiliser pour chaque coefficient de manière à minimiser la visibilité subjective globale de l'erreur associée au codage.

D'un point de vue mathématique l'opération de transformation orthogonale est réalisée par un double produit matriciel. Si X est la matrice «image», Y la matrice «transformée», H la matrice de transformation orthogonale et $H^T$ sa transposée, la transformation bidimensionnelle s'écrit:

$$Y = H \cdot X \cdot H^T$$

Comme la transformation est orthogonale, l'inverse de la matrice de transformation est égale à la transposée: $H^{-1} = H^T$ et la transformation inverse s'écrit:

$$X = H^T \cdot Y \cdot H$$

Les matrices de transformation utilisables sont variées: Hadamard, Haar, Slant-Hadamard, Fourier, etc. En télévision numérique, on se contente généralement des trois premières qui donnent lieu à des réalisations pratiques très simples et dont le temps de calcul est très court. Dans la transformation d'Hadamard, par exemple, les seuls coefficients de la matrice H sont les nombres $+1$ et $-1$ et, donc, les seules opérations à effectuer sont des additions et des soustractions. Pour limiter le nombre d'opérations, on utilise des algorithmes du type de ceux utilisés pour la transformée de Fourier discrète rapide.

L'ensemble des modules des coefficients transformés (issus d'une suite d'additions et de soustractions, donc pouvant être positifs ou négatifs) est tel que son énergie est égale à celle de l'image de départ. Dans la plupart des cas la quasi totalité de l'énergie est concentrée en quelques coefficients. On peut alors envisager de ne transmettre que ces coefficients et leurs coordonnées à l'intérieur de la matrice, ce qui devrait suffire à restituer l'image sans modifications notables par rapport à l'image de départ. La contribution des coefficients supprimés est négligeable lors de la reconstruction de l'image par transformation inverse.

Pour détecter un coefficient ayant une énergie importante, on opère par comparaison avec un seuil. Par souci de simplification les seuils sont limités à des puissances entières de deux. Dans les systèmes connus, les coefficients supérieurs au seuil affiché sont seuls transmis avec une loi de quantification linéaire dont le pas est égal au seuil.

De préférence, la valeur du seuil est adaptative et choisie de manière qu'avec une loi de codage appropriée, le débit pour l'ensemble des points de la matrice transformée soit inférieur ou égal à un débit fixe (appelé débit nominal) correspondant à la réduction de débit voulue pour transmettre le signal à 34 Mbit/s. Pour que la qualité de l'image restituée, après décodage et transformation inverse, soit acceptable, la loi de codage utilisée est une loi à longueur variable. En effet, statistiquement il y a beaucoup de coefficients dont l'amplitude est inférieure au pas de quantification et il s'agit de coder ceux-ci avec un minimum d'éléments binaires. Lorsque, pour deux matrices image, on calcule des seuils identiques, le nombre d'éléments binaires à transmettre avec la loi de codage choisie n'est pas forcément le même.

Par ailleurs, en ce qui concerne la transmission proprement dite, le débit par matrice d'image codée doit être égal au débit nominal. C'est pourquoi la différence entre le débit nominal et le débit réel consiste en une information arbitraire, des zéros par exemple. Cette information arbitraire, encore appelée «éléments binaires de bourrage», est variable selon les «matrices image» traitées, et sa quantité n'est pas toujours négligeable par rapport au débit nominal. Il apparaît alors que le canal de transmission est mal utilisé.

Un objet de la présente invention consiste à prévoir un système de codage à réduction de débit par transformation à seuil adaptatif qui évite l'inconvénient mentionné ci-dessus.

Plus particulièrement, l'objet de l'invention consiste à utiliser les temps élémentaires des «éléments binaires de bourrage» pour transmettre une information supplémentaire appelée «codage complémentaire».

L'objet de l'invention consiste à prévoir un «codage complémentaire», tel que défini ci-dessus et qui présente les avantages suivants:

– l'image restituée après décodage et transformation inverse est de meilleure qualité que dans les systèmes de l'état de la technique,

– le canal de transmission est mieux occupé: comme on le verra dans la suite, on utilisera au maximum un élément binaire comme «élément de bourrage» du fait que le «codage complémentaire» transmet un ou deux éléments binaires par coefficient,

– l'effet du bruit de source sur le codage est atténué: d'image à image, les «matrices image» se superposent et le bruit de source provoque, dans certains cas, une oscillation du seuil entre deux valeurs consécutives ce qui entraîne une variation temporelle d'énergie lumineuse que le «codage complémentaire» diminue en amplitude,

– les moyens utilisés pour mettre en œuvre le «codage complémentaire sont très simples: on réutilise le résultat du calcul du seuil dans le codage de base pour savoir quels sont les éléments binaires à utiliser pour le «codage complémentaire».

Suivant une caractéristique de l'invention, il est prévu un procédé dans lequel le «codage complémentaire» relatif à un codage de base de pas de quantification $2^s$ (S étant un nombre entier positif ou nul) est obtenu en ajoutant aux éléments binaires du codage de base jusqu'à concurrence de la capacité maximale du canal, l'élément binaire de poids $2^{s-1}$ pour chacun des coefficients, pris dans l'ordre chronologique, et, lorsque le coefficient est nul dans l'échelle de quantification de pas $2^s$ et l'élément binaire de poids $2^{s-1}$ est différent de zéro, à ajouter encore l'élément binaire de signe du coefficient considéré.

Il faut noter que ce dernier élément binaire de signe n'est pas gardé dans le codage de base car le coefficient correspondant a une valeur inférieure au pas de quantification $2^s$ et donc a une valeur nulle dans la loi de quantification associée.

En pratique, les moyens pour engendrer le «codage complémentaire» ne nécessitent, comme on le verra dans la suite qu'un certain nombre de circuits logiques supplémentaires aussi bien au niveau du codeur qu'à celui du décodeur.

Suivant une autre caractéristique de l'invention, il est prévu un système de transmission numérique à codage adaptatif d'informations analogiques échantillonnées dont les échantillons numérisés ont subi une transformation orthogonale, à réduction de débit à seuil adaptatif, comprenant, à l'émission, un codeur constitué par un transformateur à transformation orthogonale auquel sont appliqués les échantillons numérisés et dont la sortie est reliée, d'une part, à un opérateur de codage et, d'autre part, à un évaluateur de seuil dont la sortie est reliée à l'entrée de commande de l'opérateur de codage, la sortie de données de l'opérateur de codage étant reliée à une entrée d'un multiplexeur et la sortie de fin de données de l'opérateur de codage étant reliée à une entrée de commande dudit multiplexeur, ledit codeur comprenant encore un organe logique de décodage combinatoire dont une entrée est reliée à la sortie dudit transformateur, une autre entrée à la sortie dudit évaluateur de seuil et une troisième entrée reçoit un signal d'horloge à la fréquence double de celle des éléments binaires délivrés par ledit transformateur et une quatrième entrée est reliée à la sortie de fin de données de l'opérateur de codage et dont la sortie est reliée à une entrée de données dudit multiplexeur, ledit organe logique de décodage combinatoire engendrant ledit codage complémentaire.

Suivant une autre caractéristique de l'invention, ledit organe logique de décodage combinatoire comprend un circuit FPLA («Field Programmable Logic Array») et une mémoire FiFo («premier entré-premier sorti»).

Suivant une autre caractéristique, il est prévu, dans le système de transmission, à la réception, un décodeur constitué par un organe logique de décodage auquel sont appliqués les signaux transmis comportant une sortie délivrant les données de base des coefficients, une seconde sortie délivrant la valeur du seuil, une troisième sortie délivrant les données complémentaires et une quatrième sortie délivrant un signal de validation de ces données, et par un transformateur inverse à transformation orthogonale inverse de celle du codeur, la première sortie dudit organe logique de décodage étant reliée à une première entrée d'un circuit OU, d'une part, et à une première entrée d'un opérateur logique, d'autre part, la seconde sortie dudit organe logique de décodage étant reliée à l'entrée «seuil» dudit opérateur logique, la troisième sortie dudit organe logique de décodage étant reliée à l'entrée INFOE dudit opérateur et la quatrième sortie étant reliée à l'entrée ENR, une quatrième entrée recevant un signal d'horloge à la fréquence double de celle des éléments binaires fournies par la base de temps, la sortie dudit opérateur logique étant reliée à la seconde entrée dudit circuit OU, ledit opérateur logique traitant les codes complémentaires et la sortie du circuit OU étant reliée au transformateur inverse qui délivre les codes du signal.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 est un bloc-diagramme de codeur suivant l'invention,

la Fig. 2 est un schéma d'un circuit du codeur de la Fig. 1, dans lequel est engendré le «codage complémentaire»,

la Fig. 3 est un bloc-diagramme d'un décodeur suivant l'invention,

la Fig. 4 est le schéma du circuit utilisé dans le décodeur pour utiliser le «codage complémentaire» dans l'image restituée,

la Fig. 5 est un tableau définissant, dans un codeur classique, le nombre des éléments binaires effectivement transmis en fonction du nombre d'éléments binaires du module d'un coefficient,

la Fig. 6 illustre le fonctionnement d'un codeur classique en prenant, pour un coefficient, un exemple numérique de module, de signe et de seuil,

la Fig. 7 est un diagramme montrant, pour un exemple numérique de matrice 4 × 4 de coefficients transformés, la sélection des éléments binaires à transmettre effectivement dans un codeur connu,

la Fig. 8 est un diagramme montrant, en partant de l'exemple numérique de la Fig. 7, le train numérique des éléments binaires transmis,

la Fig. 9 est un diagramme illustrant, en prenant le même exemple numérique qu'à la Fig. 7, la sélection des éléments binaires du codage complémentaire obtenu suivant l'invention,

la Fig. 10 est un diagramme montrant, avec l'exemple numérique de la Fig. 9, la série des éléments binaires effectivement transmis en utilisant un codeur suivant l'invention,

la Fig. 11 est un diagramme illustrant, en prenant le même exemple numérique qu'à la Fig. 7, le tableau des échantillons numérisés restitués par le décodeur suivant l'invention, et

la Fig. 12 est un organigramme illustrant le calcul du seuil.

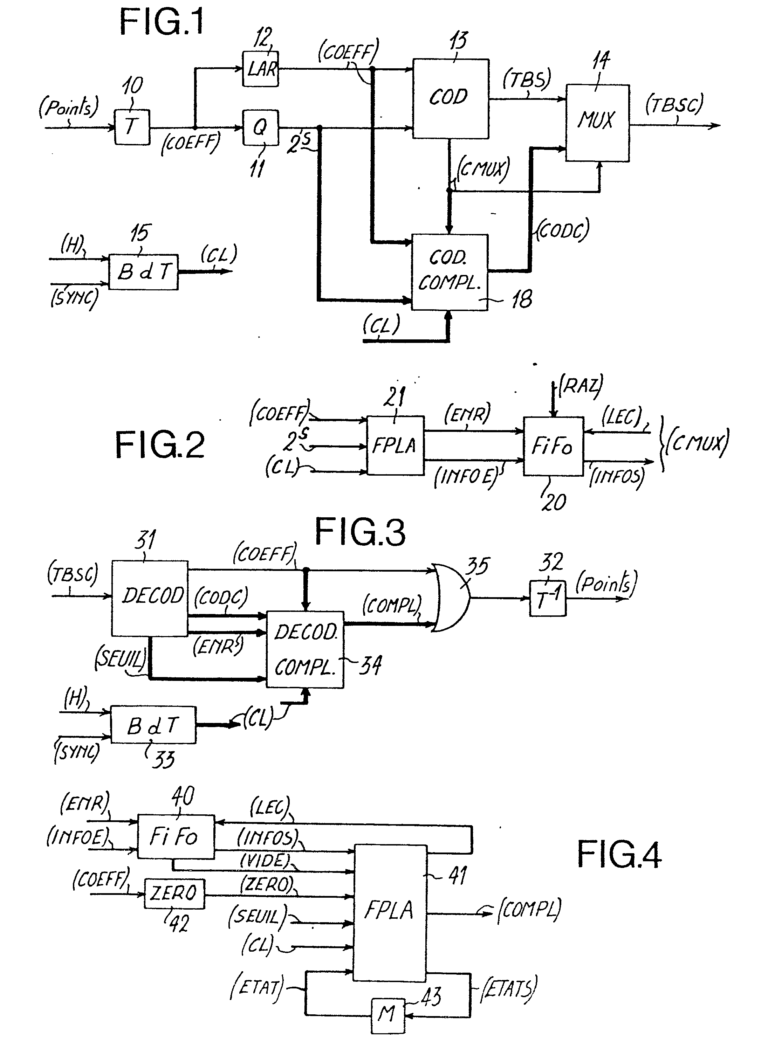

Dans le schéma de la Fig. 1, on a différencié les circuits du système de codage de base connu, représentés en traits fins, des circuits du système de codage complémentaire, représentés en traits gras.

Dans le système de codage de base, un transformateur d'Hadamard 10 a son entrée reliée à la source délivrant les signaux de points d'image et sa sortie reliée, d'une part, à l'entrée d'un opérateur logique 11 et, d'autre part, à l'entrée d'une ligne à retard 12. La sortie $2^s$ de l'opérateur logique 11 est reliée à une entrée de commande d'un codeur 13 et la sortie COEFF de la ligne à retard 12 est reliée à l'entrée de données du codeur 13. La sortie de données d'information TBS du codeur 13 est reliée à une entrée de données d'un multiplexeur 14 tandis que la sortie de commande d'envoi données de bourrage CMUX est reliée à l'autre entrée correspondante du multiplexeur 14, dont la sortie TBSC délivre les données transformées codées. Le système de codage de base est complété par une base de temps 15.

Le transformateur d'Hadamard 10 effectue le double produit matriciel sur des données de sous-images 4 × 4 points. On y utilise une décomposition selon un algorithme rapide de manière que le nombre d'opérations à effectuer en série est de 4 pour calculer un coefficient transformé. Il en résulte que si le signal vidéo numérisé appliqué à l'entrée de 10 est codé selon une loi de quantification linéaire à 8 éléments binaires, les coefficients COEFF, délivrés par 10, sont codés selon une loi de quantification linéaire à 12 éléments binaires.

L'opérateur logique 11 effectue le calcul du pas de quantification tel que le débit relatif au signal codé soit inférieur au débit nominal fixé. Cet opérateur fournit la valeur du pas de quantification $2^s$ au bout d'un temps de calcul qui vaut la durée de 16 échantillons. Le calcul est effectué suivant la formule (1) ci-après.

La ligne à retard 12 est nécessaire pour remettre en phase les signaux COEFF avec le signal $2^s$ délivré par 11.

L'opérateur de codage proprement dit 13 engendre, à partir des signaux COEFF et $2^s$, un train binaire série TBS, qui est appliqué au multiplexeur 14 avant d'être appliqué à un modulateur de transmission (non montré), et un signal de commande CMUX au multiplexeur quand tout le train TBS a été délivré au circuit 14.

Le multiplexeur 14, à la réception du signal CMUX, insère les «éléments binaires de bourrage», de manière à transmettre le train complet TBSC à 34 Mbit/s.

La base de temps 15 engendre tous les signaux de synchronisation CL et d'horloges utiles aux circuits 10 à 14. Elle est pilotée par un signal d'horloge H extrait des échantillons numérisés et dérivé du signal d'échantillonnage, ainsi que le signal de synchronisation mélangée, propre à tout signal de télévision.

Le système de codage complémentaire comprend un codeur complémentaire 18 dont la première entrée COEFF est reliée à la sortie de la ligne à retard 12, la seconde entrée $2^s$ à la sortie de l'opérateur logique 11 et la troisième entrée CMUX à la sortie correspondante du codeur 13. La sortie CODC du codeur 18 délivre le codage complémentaire et est reliée à une troisième entrée CODC du multiplexeur 14.

Ainsi, le codeur 18 utilise les mêmes signaux que le codeur 13 pour effectuer la mise en mémoire des éléments binaires correspondant au «codage complémentaire». Pour lire la mémoire du codeur 18, on utilise le signal CMUX et les signaux lus CODC sont appliqués au multiplexeur 14. Le multiplexeur 14 transmet après les signaux TBS, en priorité les signaux CODC et, si les signaux CODC ne suffisent pas à remplir une trame, un élément binaire de bourrage. En effet, on verra dans la suite qu'un éventuel bourrage se réduit à un seul élément binaire.

Le codeur complémentaire 18 est montré plus en détail à la Fig. 2. Il comprend un organe logique de décodage combinatoire 21 comportant trois entrées, dont la première reçoit le signal $2^s$, la seconde le signal COEFF et la troisième un signal CL provenant de la base de temps 15. L'organe logique 21 comporte deux sorties ENR et INFOE qui sont reliées aux entrées correspondantes d'une mémoire FiFo 20. La mémoire 20 comporte encore une entrée de lecture LEC qui est reliée à la sortie CMUX de 13 et une sortie INFOS qui est reliée au multiplexeur 14. Enfin, elle comporte une entrée RAZ reliée à une sortie de la base de temps 15.

La mémoire FiFo 20 a une capacité d'au moins 32 éléments binaires en série. Le signal ENR est utilisé pour commander l'enregistrement d'un élément binaire de INFOE dans la mémoire FiFo. Le signal ENR est activé dans les deux cas suivants:

– pour chacune des valeurs du signal COEFF, l'élément binaire de poids $2^{S-1}$ est systématiquement mémorisé, ce qui se fait durant la première moitié du signal d'horloge, c.a.d. CL = 0, et

– pour les valeurs A du module du signal COEFF telles que $2^{S-1} \leqslant A < 2^S$, l'élément binaire de signe du même signal, ce qui se fait durant la seconde moitié du signal d'horloge, c.a.d. CL = 1.

Le signal LEC commande la lecture de la mémoire FiFo 20. Le signal RAZ initialise la mémoire FiFo 20, chaque fois que l'on change de matrice des coefficients transformés.

En pratique, l'organe logique 21 est constitué par un circuit «FPLA», tel que le circuit 82S100 commercialisé par la société «Signetics».

A titre d'exemple non limitatif, on va décrire d'abord un codage par seuil adaptatif pour examiner l'amélioration apportée par le «codage complémentaire». Après calcul du seuil, les différents niveaux de l'échelle de quantification sont numérotés avec un code à longueur variable qui se décompose en deux parties:

– un préfixe comportant n «1» et un «0», qui indique que le coefficient codé comporte n éléments binaires d'information,

– un mot d'information qui comporte (n-1) éléments binaires de la valeur absolue du coefficient dans la nouvelle échelle de quantification, l'élément binaire de poids fort étant omis, plus l'élément binaire de signe.

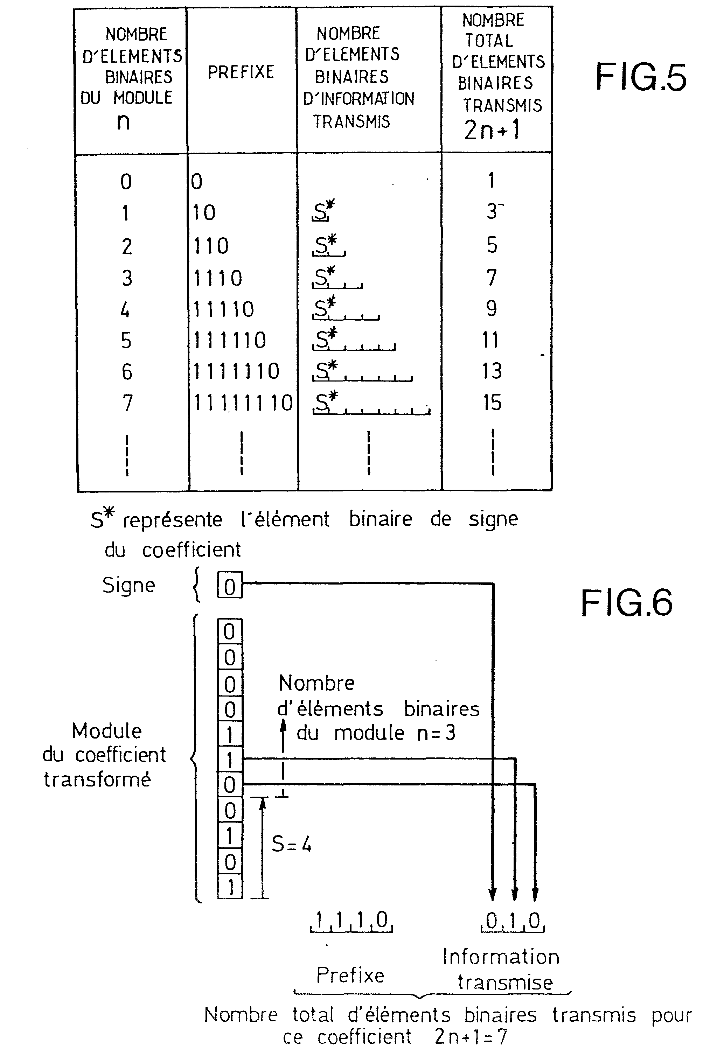

On peut remarquer que le préfixe définit la position de l'élément binaire de poids le plus fort non nul du module du coefficient. Il est donc inutile de le transmettre et on peut le remplacer par l'élément binaire donnant le signe du coefficient. La Fig. 5 donne les éléments binaires à transmettre en fonction du nombre n des éléments binaires du module dans la nouvelle échelle de quantification. Le nombre des éléments binaires à transmettre est de (2n + 1) pour un coefficient dont le module comprend n éléments binaires dans la nouvelle échelle de quantification dont le pas est égal au seuil. La Fig. 6 donne un exemple de codage d'un coefficient dans le cas où le seuil est tel que S = 4. Le préfixe à transmettre est établi suivant la règle illustrée ci-dessus et à la Fig. 5, et les flèches doubles indiquent les éléments binaires significatifs effectivement transmis.

Pour un bloc transformé de taille 4 × 4, le débit $D_S$ correspondant à un seuil $2^S$ est:

$$D_S = \sum_{i,\,j=0}^{4} (2n_{ij} + 1) + K \qquad (1)$$

où

– $n_{ij}$ est le nombre d'éléments binaires du module du coefficient transformé de coordonnées (i, j) dans une échelle de quantification dont le pas est égal au seuil, et

– K est un nombre fixe d'éléments binaires indiquant le seuil utilisé pour le bloc (K étant égal à 4 dans l'exemple de la Fig. 6).

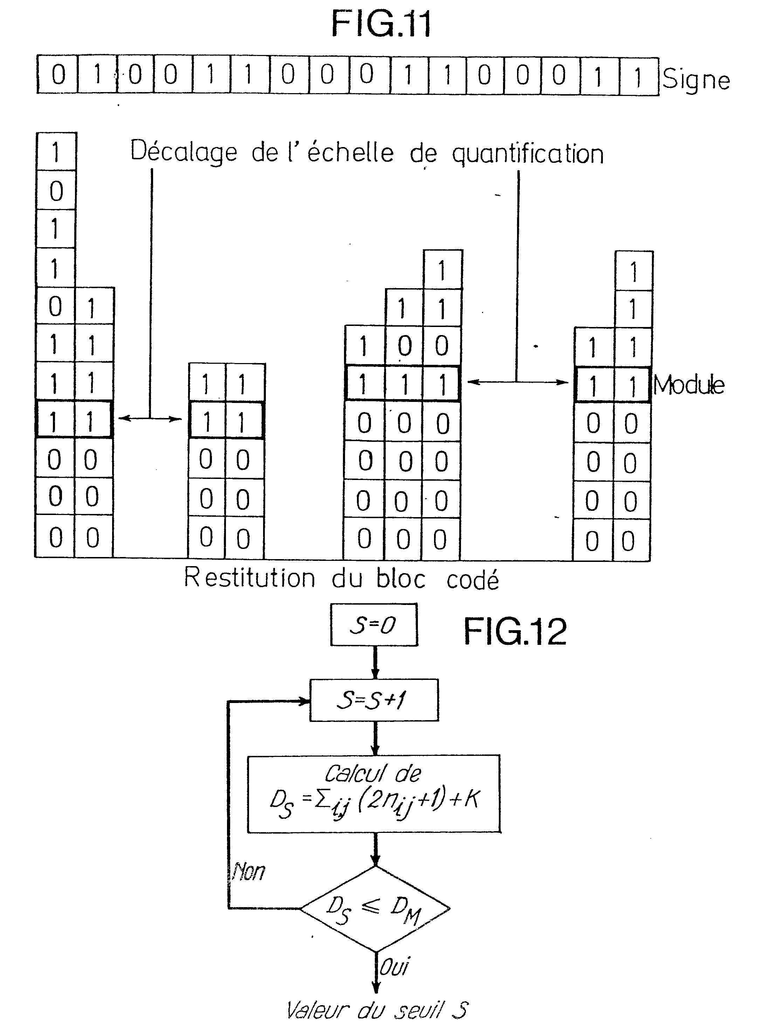

En pratique, pour déterminer la valeur du seuil $2^S$ qui est utilisé pour le codage, on procède comme suit. On initialise d'abord le seuil à zéro, puis on l'incrémente d'une unité jusqu'à ce que le débit correspondant $D_S$ calculé à l'aide de la formule ci-dessus soit inférieur ou égal au débit nominal $D_M$. L'organigramme de la Fig. 12 illustre le calcul de la valeur du seuil S.

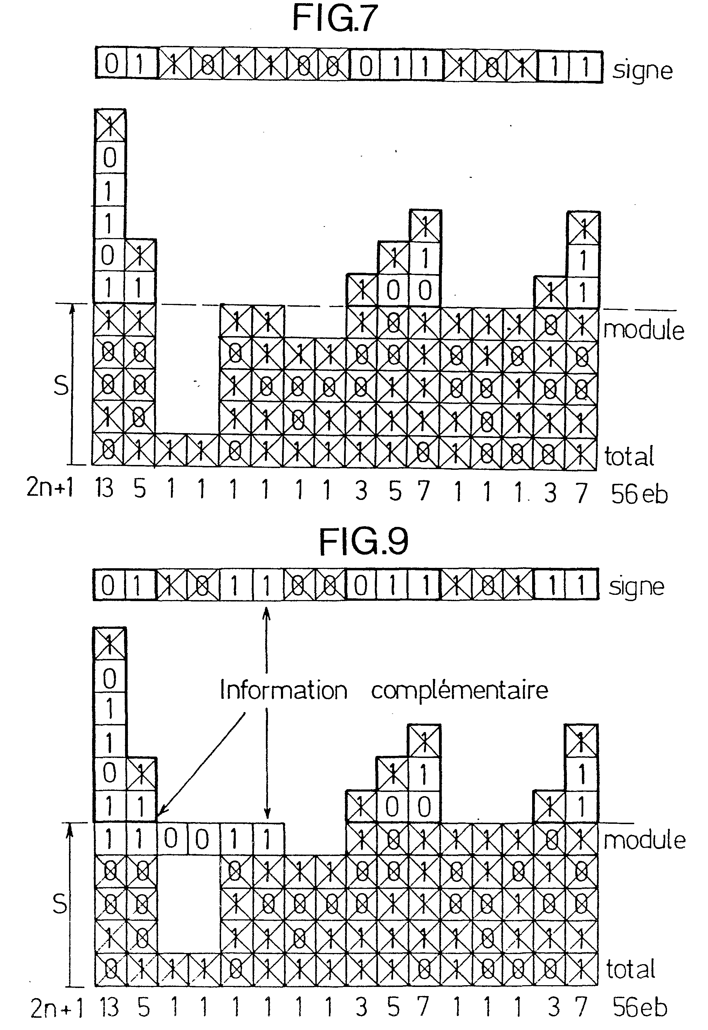

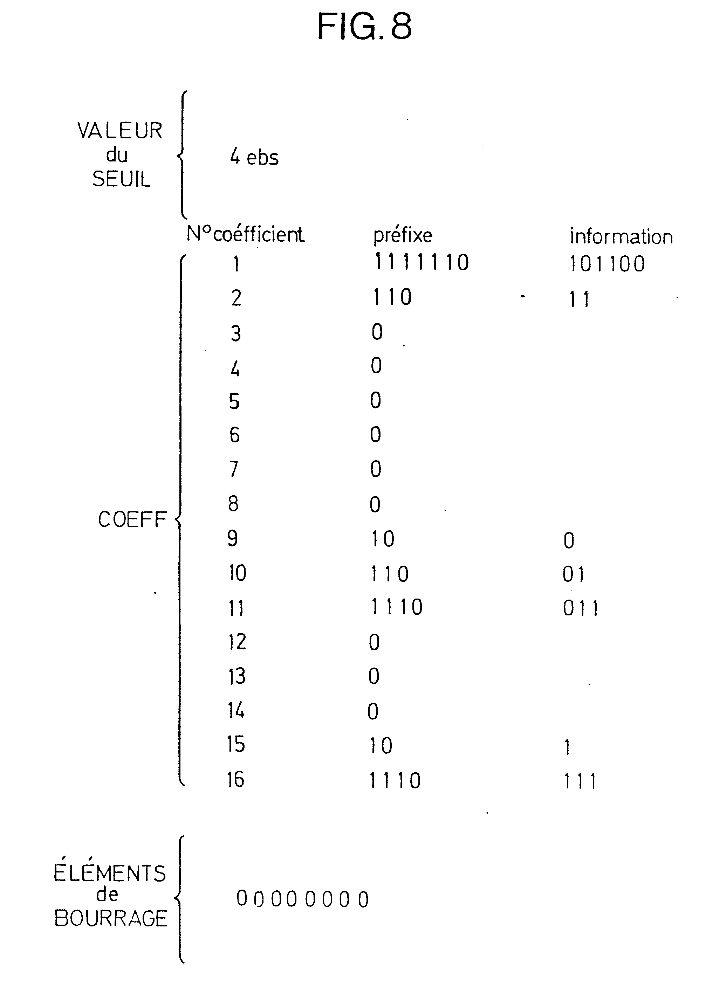

Les Figs. 7 et 8 donnent un exemple de bloc transformé et, en suivant la règle définie ci-dessus et illustrée aux Figs. 5 et 6, on détermine les préfixes et les éléments binaires transmis qui se distinguent de ceux qui ne le sont pas par le fait que ces derniers sont barrés. La Fig. 8 indique clairement, coefficient par coefficient, les éléments binaires, qui mis en série, forment le signal TBS. Il apparaît que les $D_M$ éléments binaires réservés pour chacun des blocs ne sont pas tous utilisés, d'où une mauvaise occupation du canal de transmission. En effet, après avoir calculé le seuil S et le débit $D_S$ correspondant à ce seuil, le nombre d'éléments binaires disponibles sur le canal de transmission pour le bloc traité, comprend $D_M - D_S$ éléments binaires. Dans l'exemple illustré aux Figs. 7 et 8, $D_M$ = 64 eb et $D_S$ = 56 eb, il faut donc ajouter huit ebs de bourrage ce qui est indiqué à la Fig. 8.

Suivant l'invention, ce reliquat est utilisé pour transmettre un complément d'information pour améliorer le codage du bloc. L'information complémentaire à transmettre est déterminée en traitant successivement les points dans l'ordre de sortie du transformateur jusqu'à épuisement de la place disponible: on transmet pour chaque coefficient l'élément binaire de poids $2^{S-1}$ et, lorsque le module du coefficient a une amplitude A telle que:

$$2^{S-1} \leqslant A < 2^S$$

on transmet en plus l'élément binaire de signe du coefficient.

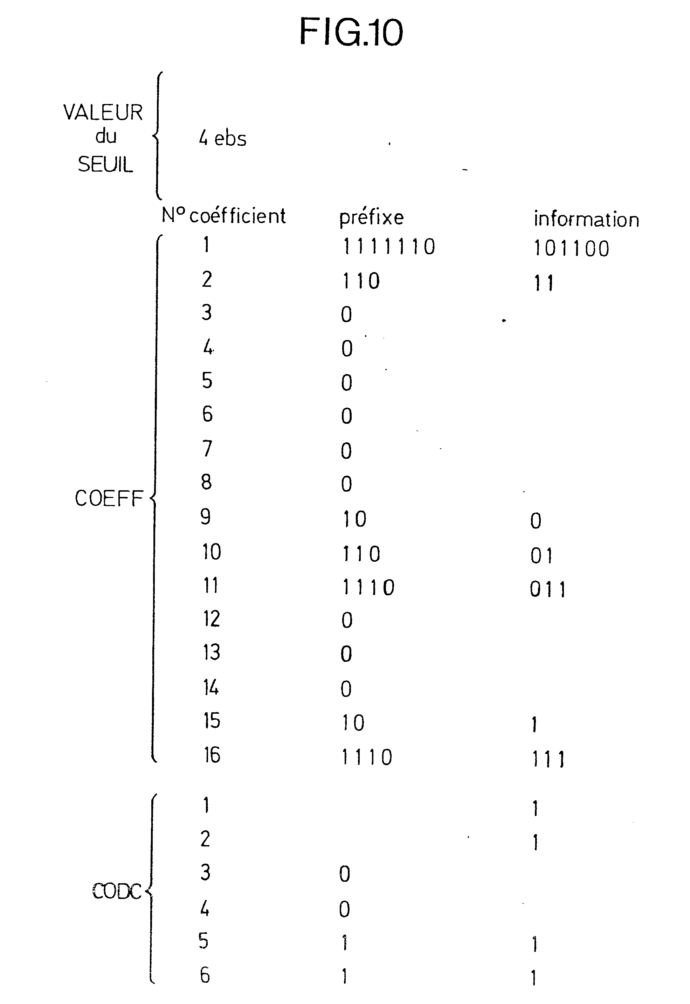

La Fig. 9 illustre comment, en partant des mêmes coefficients qu'à la Fig. 7, on obtient suivant l'invention un codage amélioré pour le même bloc. On remarque que pour les six premiers coefficients disponibles à la sortie du transformateur, l'échelle de quantification est linéaire, de pas $2^{S-1}$, et pour les dix derniers coefficients du bloc, c'est une échelle linéaire, de pas $2^S$, ce qui revient à utiliser, pour les six premiers coefficients, une échelle de quantification ayant deux fois plus de niveaux, c'est-à-dire que ces six coefficients sont transmis avec une meilleure précision que les autres.

Cette amélioration consiste à ne tronquer que (S-1) éléments binaires pour les six premiers coefficients au lieu des S éléments binaires de codage par seuil non amélioré. Le fait de ne tronquer que (S-1) éléments binaires fait apparaître de nouveaux coefficients qui sont nuls dans le codage par seuil non amélioré (par exemple les coefficients N° 5 et N° 6 de la Fig. 9). Pour ces coeffi- cents, il faut non seulement transmettre l'élément binaire de poids $2^{s-1}$, mais également l'élément binaire de signe car celui-ci n'a pas été transmis par le codage par seuil non amélioré. A la Fig. 9, on a ajouté, en traits gras, les ebs complémentaires à transmettre avec leurs valeurs respectives. La Fig. 10 indique la place de ces éléments binaires dans la trame de transmission.

En se référant maintenant à la Fig. 3, on va d'abord décrire un décodeur connu capable de décoder les signaux transmis par la partie connue du codeur de la Fig. 1, la partie concernée du décodeur connu étant dessinée en traits fins. Cette partie connue du décodeur comprend un organe logique de décodage 31 à l'entrée duquel sont appliqués les signaux codés provenant du codeur de la Fig. 1. La sortie COEFF de l'organe 31 est alors reliée (directement, sans passer par la porte OU 35) à un transformateur d'Hadamard inverse ($T^{-1}$) 32 qui délivre le signal vidéo numérisé reconstitué. Il comprend également une base de temps 33.

L'organe logique 31 décode le train binaire série entrant en séparant l'information relative aux coefficients transformés COEFF, la valeur du pas de quantification SEUIL associé au codage et les «éléments binaires de bourrage» CODC, ainsi qu'un signal ENR qui valide ceux-ci. Le signal ENR est émis par 31 dès que l'organe logique 31 a transmis le seizième coefficient transformé de COEFF.

Le transformateur d'Hadamard inverse 32 effectue le double produit matriciel sur des matrices de taille $4 \times 4$ de coefficients transformés COEFF et, donc, à partir du signal COEFF, il élabore le signal vidéo numérisé POINTS.

La base de temps 33 produit tous les signaux de synchronisation et horloges utiles à tous les circuits du décodeur, à partir du signal d'horloge H reconstitué à partir du train reçu et à partir des signaux de synchronisation de télévision.

Comme le montre encore la Fig. 3, le décodeur suivant l'invention comprend, en plus des circuits 31 à 33 en traits fins, un opérateur logique 34 et une porte OU 35 qui sont tous deux dessinés en traits forts.

L'opérateur logique 34 a une entrée reliée à la sortie COEFF de l'organe 31, une seconde entrée INFOE reliée à une sortie de 31 qui délivre les éléments binaires du codage complémentaire CODC, une troisième entrée reliée à une sortie ENR de 31 qui valide le signal CODC, et une quatrième entrée reliée à la sortie SEUIL de 31 qui délivre la valeur du seuil. La sortie COMPL de l'opérateur 34 est reliée à une entrée de la porte OU 35 dont l'autre entrée est reliée à la sortie COEFF de l'opérateur 31 et dont la sortie est reliée à l'entrée du transformateur 32. Ainsi, dans ce cas, la porte OU transmet le signal COEFF au transformateur 32.

L'opérateur 34 effectue le décodage des éléments binaires constituant le signal CODC qui transporte l'information relative au codage complémentaire, objet de l'invention. Il est représenté plus en détail à la Fig. 4. Il comprend une mémoire FiFo 40, un opérateur logique 41, un générateur de signal «zéro» 42 et une mémoire 43.

La mémoire FiFo 40 ist prévue pour mémoriser au moins 32 éléments binaires en série. Son mode de fonctionnement est identique à celui de la mémoire 20 de la Fig. 2. Elle comporte une entrée INFOE reliée à la sortie CODC de l'opérateur 31, une sortie INFOS reliée à une entrée du circuit 41, une entrée ENR reliée à une sortie de l'opérateur 31, une entrée de lecture LEC reliée à une sortie de l'opérateur 41 et, enfin, une sortie de commande VIDE reliée à une entrée de commande de l'opérateur 41. Le drapeau ou signal de commande VIDE est engendré de façon interne dans la mémoire FiFo et permet de savoir à quel moment toute l'information qui est présente dans la mémoire a été lue complètement.

L'organe logique de décodage séquentiel 41 produit le signal de commande de lecture LEC de la mémoire FiFo 40 ainsi que le signal COMPL qui est la partie du signal décodé correspondant au codage complémentaire. C'est un circuit «FPLA» qui est utilisé pour effectuer le décodage combinatoire permettant d'élaborer LEC et COMPL.

La mémoire 43 a une capacité d'un élément binaire. Elle a son entrée reliée à une sortie ETATS de l'organe 41 et sa sortie reliée à l'entrée ETAT de celui-ci. L'élément binaire mis en mémoire dans 43 est caractéristique de l'état de l'organe 41. Cette variable ETAT définit s'il faut extraire l'élément binaire de signe de la mémoire FiFo 40, en plus de l'élément binaire correspondant au seuil $2^{s-1}$.

Le générateur de signal ZERO 42 a son entrée reliée à la sortie COEFF de l'opérateur 31 et sa sortie reliée à l'entrée ZERO de l'organe 41. Il délivre un signal quand la valeur de son signal d'entrée est nulle pendant le codage de base.

Les signaux sur lesquels est opéré le décodage sont donc:
- le signal ZERO,
- le signal SEUIL représentant la valeur du pas de quantification associé au codage de base et qui est fourni par 31,
- le signal ETAT qui est interne au système de décodage séquentiel,
- les signaux INFOS et VIDE qui sont fournis par la mémoire FiFo 40,
- le signal CL fourni par la base de temps 33 du décodeur qui, comme dans le codeur, Fig. 2, découpe la période du signal COEFF en deux demi-périodes égales de façon à pouvoir lire, le cas échéant, deux éléments binaires par période dans la mémoire FiFo 40.

Le principe du décodage est le suivant:
- Aussi longtemps que la mémoire FIFO 40 n'est pas vide, état caractérisé par un signal VIDE nul:
- durant la première demi-période définie par le 1er état du signal CL, le signal LEC est émis ce qui se traduit par la lecture de la mémoire FIFO 40; l'information lue INFOS produit un signal COMPL sur l'élément binaire numéroté $2^{s-1}$. Si le coefficient traité de COEFF est égal à zéro, ce qui se traduit par un signal ZERO égal à «1» et si le signal INFOS vaut «1», la variable d'état ETAT est mise à «1» de façon à venir lire l'élément binaire de signe dans la mémoire FIFO 40 durant la deuxième demi-période, sinon la variable d'état est à zéro et le système est gardé dans cet état,

– durant la deuxième demi-période définie par le 2e état du signal CL, si le signal ETAT vaut 0 à la sortie de 43, le signal LEC est nul et le signal COMPL garde la même valeur que durant la première demi-période; si le signal ETAT vaut 1 à la sortie de 43, le signal LEC est mis à 1 de façon à refaire une lecture de la mémoire FIFO 40 pour positionner l'élément binaire lu INFOS au rang numéro 12, qui correspond au numéro de l'élément binaire de signe du signal COMPL; de plus, l'élément binaire numéroté $2^{s-1}$ prend la valeur 1.

– Lorsque la mémoire FIFO 40 est vide, le signal VIDE est égal à «1» si bien que le signal COMPL prend la valeur zéro.

L'additionneur simplifié, constitué par la porte OU 35, rajoute le signal COMPL au signal COEFF. En pratique, cet additionneur se compose de douze portes logiques OU à deux entrées branchées entre les éléments binaires de mêmes numéros de signaux COMPL et COEFF.

Les valeurs des coefficients transmis et utilisés à la reconstruction de l'image se différencient des valeurs des coefficients avant codage par une troncature de S ou (S-1) éléments binaires de poids faibles. Pour diminuer l'effet subjectif de cette erreur de troncature, l'élément binaire de poids fort parmi ceux ayant été tronqués, est forcé à 1, sauf pour les coefficients qui sont nuls, comme le montre la Fig. 11. Cela revient à centrer le niveau de restitution sur l'ensemble des niveaux qui ont été confondus par la loi de codage.

Bien que la réalisation selon l'invention qui vient d'être faite s'applique à la télévision, il reste entendu que toute transmission numérique dans laquelle une réduction de débit est souhaitable peut bénéficier des mêmes dispositions. En particulier ces dispositions s'appliquent au codage et à la transmission du son de haute fidélité où le débit atteint des flux importants qu'il est avantageux de ramener à des valeurs plus conventionnelles. La transformation orthogonale peut encore être utilisée en regroupant en paquets les échantillons des signaux numérisés consécutifs et en y appliquant le codage par seuil adaptatif suivi d'un codage complémentaire; le rôle des signaux de synchronisation de ligne et trame étant dévolu aux signaux de synchronisation de trame du train numérique.

Les exemples de réalisation, qui viennent d'être décrits, sont supposés fabriqués avec des composants dont la vitesse de fonctionnement répond aux exigences de la télévision.

Pour d'autres applications, dans lesquelles la vitesse serait moins élevée, on pourrait mettre en œuvre d'autres composants ou d'autres technologies. Avec les microprocesseurs, par exemple, qui actuellement ne fonctionnent que pour traiter des signaux basse-fréquence, la logique câblée serait remplacée par une logique programmée pour obtenir les mêmes résultats. Les progrès attendus dans les performances des microprocesseurs devraient les rendre aptes à effectuer ce traitement à la vitesse des signaux de télévision. En variante, les tâches décrites pourraient être accomplies par un ou plusieurs circuits intégrés spécialisés.

## Revendications

1. Procédé de transmission numérique à codage à réduction de débit par transformation orthogonale à seuil adaptatif dans lequel, dans chaque trame, après les éléments binaires des coefficients obtenus par un codage de base de pas de quantification $2^s$ (S étant un nombre entier positif ou nul), on transmet un codage complémentaire caractérisé en ce que le codage complémentaire est obtenu en ajoutant jusqu'à concurrence de la capacité maximale du canal, l'élément binaire de poids $2^{s-1}$ pour chacun des coefficients, pris dans l'ordre chronologique, et, lorsque le coefficient est nul dans l'échelle de quantification de pas $2^s$ et l'élément binaire de poids $2^{s-1}$ est différent de zéro, à ajouter encore l'élément binaire de signe du coefficient considéré.

2. Système de transmission numérique à codage adaptatif d'informations analogiques échantillonnées dont les échantillons numérisés ont subi une transformation orthogonale, à réduction de débit à seuil adaptatif, en vue de la mise en œuvre du procédé selon la revendication 1, comprenant, à l'émission, un codeur constitué par un transformateur à transformation orthogonale (T) auquel sont appliqués les échantillons numérisés et dont la sortie est reliée, d'une part, à un opérateur de codage (13) et, d'autre part, à un évaluateur de seuil (11) dont la sortie est reliée à l'entrée de commande de l'opérateur de codage (13), la sortie de données de l'opérateur de codage (13) étant reliée à une entrée d'un multiplexeur (14) et la sortie de fin de données de l'opérateur de codage (13) étant reliée à une entrée de commande dudit multiplexeur (14), caractérisé en ce que le codeur comprend encore un organe logique de décodage combinatoire (18) dont une entrée est reliée à la sortie dudit transformateur (10), une autre entrée à la sortie dudit évaluateur de seuil (11) et une troisième entrée reçoit un signal d'horloge à la fréquence double de celle des éléments binaires délivrés par ledit transformateur (10) et une quatrième entrée est reliée à la sortie de fin de données de l'opérateur de codage (13) et dont la sortie est reliée à une entrée de données dudit multiplexeur (14), ledit organe logique de décodage combinatoire (18) engendrant ledit codage complémentaire.

3. Système suivant la revendication 2, caractérisé en ce que ledit organe logique de décodage combinatoire comprend un circuit FPLA («Field Programmable Logic Array») (21) et une mémoire FiFo («premier entré-premier sorti») (20), le circuit FPLA (21) ayant deux sorties (ENR et INFOE) reliées respectivement aux entrées d'enregistrement et de données de la mémoire FiFo (20), laquelle a son entrée de lecture (LEC) reliée à la sortie de fin de données de l'opérateur de codage (13) et une sortie de données (INFOS) reliée à l'entrée (CODC) du multiplexeur (14).

4. Système de transmission suivant la revendication 2 ou 3, caractérisé en ce qu'il comprend, à la réception, un décodeur constitué par un organe logique de décodage (31) auquel sont appliqués les signaux transmis comportant une sortie (COEFF) délivrant les données de base des coefficients, une seconde sortie (SEUIL) délivrant la valeur du seuil, une troisième sortie (CODC) délivrant les données complémentaires et une quatrième sortie (ENR) délivrant un signal de validation de ces données, et par un transformateur inverse (32) à transformation orthogonale inverse de celle du codeur, la première sortie (COEFF) dudit organe logique de décodage (31) étant reliée à une première entrée d'un circuit OU (35), d'une part, et à une première entrée d'un opérateur logique (34), d'autre part, la seconde sortie (SEUIL) dudit organe logique de décodage (31) étant reliée à l'entrée (SEUIL) dudit opérateur logique (34), la troisième sortie (CODC) dudit organe logique de décodage (31) étant reliée à l'entrée (INFOE) dudit opérateur (34) et la quatrième sortie (ENR) étant reliée à l'entrée (ENR), une entrée (CL) de l'opérateur (34) recevant un signal d'horloge à la fréquence double de celle des éléments binaires fourni par la base de temps (33), la sortie dudit opérateur logique (34) étant reliée à la seconde entrée dudit circuit OU (35), ledit opérateur logique (34) traitant les codes complémentaires et la sortie du circuit OU (35) étant reliée au transformateur inverse (32) qui délivre les codes du signal.

**Claims**

1. A digital transmission system with rate reduction encoding through orthogonal transformation with adaptative threshold wherein, in each frame, after the bits of the coefficients resulting from the encoding with quantification step $2^s$, (S being an integer either positive or nil), there is transmitted a supplementary encoding characterized in that said supplementary encoding is obtained by adding, up to the maximum capacity of the channel, the bit of weight $2^{s-1}$ for each one of the coefficients, taken in the chronological order and, when the coefficient is nil in the quantification scale of step $2^s$, as the same time as the bit of weight $2^{s-1}$ is different from zero, by further adding the sign bit of the coefficient under consideration.

2. A digital transmission system with adaptative encoding of sampled analog information the digitized samples of which have been subjected to an orthogonal transformation, with adaptative threshold rate reduction, in order to implement the system according to claim 1, comprising, in the transmission station, an encoder comprised of an orthogonal transformation converter (T) which the digitized samples are applied to, and the output of which is connected, on the one hand, to an encoding operator (13) and, on the other hand, to a threshold evaluating device (11) having an output connected to the control input of the encoding operator (13), the data output from the encoding operator (13) being connected to an input of a multiplexer (14) and the data end output of the coding operator (13) being connected to a control input of said multiplexer (14), characterized in that the encoder further comprises a combinatory logical decoding member (18) having a first input connected from the output of said converter (10), a second input from the output of said threshold evaluating device (11) and a third input receiving a clock signal at twice the bit frequency delivered from said converter (10), and a fourth input connected from the data end output of the encoding operator (13) and an output connected to a data input of said multiplexer (14), said combinatory logical decoding member (18) generating said supplementary encoding.

3. A system according to claim 2, characterized in that said combinatory logical decoding member comprises a FPLA ("Field Programmable Logic Array") circuit and a FiFo ("first in – first out") memory (20), the FPLA circuit (21) having two outputs (ENR and INFOE) respectively cennected from the write and data inputs of the FiFo memory (20), which has its read-out input (LEC) connected from the data end output of the encoding operator (13) and a data output (INFOS) connected to the input (CODC) of multiplexer (14).

4. A transmission system according to either claim 2 or 3, characterized in that it comprises, in the reception station, a decoding device comprised of a logical decoding member (31) which the transmitted signals are applied to, which comprises an output (COEFF) delivering the basic data of the coefficients, a second output (THRESHOLD) delivering the value of the threshold, a third output (CODC) delivering the supplementary data and a fourth output (ENR) delivering a validation signal for those data, and of a reverse converter (32), the orthogonal transformation of which is reversed with respect to that of the encoder, the first output (COEFF) of said logical decoding member (31) being connected to a first input of an OR circuit (35) on the one hand, and a first input of a logical operator (34), on the other hand, the second output (THRESHOLD) of said logical decoding member (31) being connected to the input (THRESHOLD) of said logical operator (34), the third output (CODC) of said logical decoding member (31) being connected to the input (INFOE) of said operator (34) and the fourth output (ENR) being connected to the input (ENR), an input (CL) of the operator (34) receiving a clock signal at twice the bit frequency supplied from the time base (33), the output of said logical operator (34) being connected to the second input of the OR circuit (35), said logical operator (34) processing the supplementary codes, and the output of the OR circuit (35) being connected to the reverse transformer (32) which delivers the codes of the signal.

**Patentansprüche**

1. Verfahren zur digitalen Übertragung mit Reduktions-Codierung der Übertragungsgeschwindigkeit durch orthogonale Transformation mit adaptivem Schwellenwert, wobei in jedem Raster nach den Binärelementen der durch eine Basis-Codierung von Quantifications-Schritten $2^s$ erhaltenen Koeffizienten eine Komplementär-Codierung übertragen wird (wobei S eine ganze positive Zahl oder Null ist), dadurch gekennzeichnet, dass die Komplementär-Codierung durch Hinzufügen des Gewichtungs-Binärelements $2^{s-1}$ für jeden der Koeffizienten bis zur Konkurrenz der Maximal-Kapazität des Kanals in chronologischer Reihenfolge erreicht wird, und wenn der Koeffizient in der Quantifications-Skala des Schrittes $2^s$ gleich Null ist und das Gewichtungs-Binärelement $2^{s-1}$ von Null verschieden ist, ausserdem noch das Vorzeichen-Binärelement des berücksichtigten Koeffizienten hinzuaddiert wird.

2. Digitales Übertragungs-System mit adaptiver Codierung von aufgetasteten analogen Informationen, deren digitalisierte Auftastungen eine orthogonale Transformation erfahren haben, mit adaptiver Reduktion der Schwellwertrate nach dem Verfahren gemäss Anspruch 1, enthaltend in der Sende-Station einen durch einen Umsetzer (T) für orthogonale Transformation gebildeten Codierer, dem die digitalisierten Auftastungen zugeführt werden und dessen Ausgang einerseits mit einem Codier-Operator (13) und andererseits mit einer Schwellwert-Abschätz-Einrichtung (11) verbunden ist, deren Ausgang mit dem Steuereingang des Codier-Operators (13) verbunden ist, wobei der Daten-Ausgang des Codier-Operators (13) mit einem Eingang eines Multiplexers (14) verbunden ist und der Daten-Endausgang des Codier-Operators (13) mit einem Steuereingang des genannten Multiplexers (14) verbunden ist, dadurch gekennzeichnet, dass der Codierer zusätzlich ein kombinatorisches logisches Decodierung-Organ (18) enthält, von dem ein Eingang mit dem Ausgang des genannten Umsetzers (10) verbunden ist, ein anderer Eingang mit dem Ausgang der genannten Schwellwert-Abschätz-Einrichtung (11) und ein dritter Eingang ein Taktsignal empfängt, das der doppelten Frequenz der Binärelemente entspricht, die von dem genannten Umsetzer (10) geliefert werden, und ein vierter Eingang mit dem Daten-Endausgang des Codier-Operators (13) verbunden ist, dessen Ausgang mit einem Daten-Eingang des genannten Multiplexers (14) verbunden ist, wobei das genannte logische Organ zur kombinatorischen Decodierung (18) die genannte Komplementär-Codierung erzeugt.

3. System nach Anspruch 2, dadurch gekennzeichnet, dass das genannte logische Organ zur kombinatorischen Decodierung eine FPLA-Schaltung (21) enthält («Field Programmable Logic Array») und einen FiFo-Speicher (20) («first in – first out»), wobei die Schaltung FPLA (21) zwei Ausgänge (ENR und INFOE) besitzt, die mit den Eingabe-Eingängen bzw. den Daten-Eingängen des FiFo-Speichers (20) verbunden sind, dessen Lese-Eingang (LEC) mit dem Daten-Endausgang des Codier-Operators (13) verbunden ist und ein Daten-Ausgang (INFOS) mit dem Eingang (CODC) des Multiplexers (14) verbunden ist.

4. Übertragungs-System nach Anspruch 2 oder 3, dadurch gekennzeichnet, dass es an der Empfangs-Station einen Decodierer enthält, der aus einem logischen Decodierungs-Organ (31) besteht, die ausgesendeten Signale zugeführt werden, das einen Ausgang (COEFF) enthält, der die Basis-Daten der Koeffizienten liefert, einen zweiten Ausgang (SEUIL), der den Schwellwert liefert, einen dritten Ausgang (CODC), der die Komplementär-Daten liefert und einen vierten Ausgang (ENR), der ein Gültigkeits-Signal dieser Daten liefert, und mit einem inversen Umsetzer (32) zur orthogonalen Transformation, die invers zu derjenigen des Codierers ist, wobei der erste Ausgang (COEFF) des genannten logischen Dekodierungs-Organs (31) mit einem ersten Eingang einer ODER-Schaltung (35) einerseits und einem ersten Eingang eines logischen Operators (34) andererseits verbunden ist, wobei der zweite Ausgang (SEUIL) des genannten logischen Decodierungs-Organs (31) mit dem Eingang (SEUIL) des genannten logischen Operators (34) verbunden ist, wobei der dritte Ausgang (CODC des genannten Decodierungs-Organs (31) mit dem Eingang (INFOE) des genannten Operators (34) verbunden ist, und wobei der vierte Ausgang (ENR) mit dem Eingang (ENR) verbunden ist, wobei ein Eingang (CL) des Operators (34) ein Taktsignal einer Frequenz empfängt, die der doppelten Frequenz der Binärelemente entspricht, die von der Zeit-Basis (33) geliefert werden, wobei der Ausgang des genannten logischen Operators (34) mit dem zweiten Eingang der genannten ODER-Schaltung (35) verbunden ist, und wobei der genannte logische Operator (34) die Komplementär-Codes verarbeitet und der Ausgang der ODER-Schaltung (35) mit dem Umkehr-Transformator (32) verbunden ist, der die Codes des Signals liefert.

FIG.1

FIG.2

FIG.3

FIG.4

| NOMBRE D'ELEMENTS BINAIRES DU MODULE $n$ | PREFIXE | NOMBRE D'ELEMENTS BINAIRES D'INFORMATION TRANSMIS | NOMBRE TOTAL D'ELEMENTS BINAIRES TRANSMIS $2n+1$ |
|---|---|---|---|
| 0 | 0 | | 1 |
| 1 | 10 | $S^*$ | 3 |
| 2 | 110 | $S^*$ | 5 |
| 3 | 1110 | $S^*$ | 7 |
| 4 | 11110 | $S^*$ | 9 |
| 5 | 111110 | $S^*$ | 11 |
| 6 | 1111110 | $S^*$ | 13 |
| 7 | 11111110 | $S^*$ | 15 |
| ⋮ | ⋮ | ⋮ | ⋮ |

**FIG.5**

$S^*$ représente l'élément binaire de signe du coefficient

**FIG.6**

Signe { 0

Module du coefficient transformé {
0
0
0
0
1
1
0
0
1
0
1

Nombre d'éléments binaires du module $n=3$

$S=4$

1 1 1 0

Prefixe

0 1 0

Information transmise

Nombre total d'éléments binaires transmis pour ce coefficient $2n+1=7$

13

# FIG.7

signe

S

module

total

2n+1  13  5  1  1  1  1  1  1  3  5  7  1  1  1  3  7  56 eb

# FIG.9

signe

Information complémentaire

S

module

total

2n+1  13  5  1  1  1  1  1  1  3  5  7  1  1  1  3  7  56eb

# FIG.8

VALEUR
du       {       4 ebs
SEUIL

|  | N°coéfficient | préfixe | information |
|---|---|---|---|
|  | 1 | 111110 | 101100 |
|  | 2 | 110 | 11 |
|  | 3 | 0 | |
|  | 4 | 0 | |
|  | 5 | 0 | |
|  | 6 | 0 | |
|  | 7 | 0 | |
| COEFF { | 8 | 0 | |
|  | 9 | 10 | 0 |
|  | 10 | 110 | 01 |
|  | 11 | 1110 | 011 |
|  | 12 | 0 | |
|  | 13 | 0 | |
|  | 14 | 0 | |
|  | 15 | 10 | 1 |
|  | 16 | 1110 | 111 |

ÉLÉMENTS
de       {       0 0 0 0 0 0 0 0
BOURRAGE

# FIG.10

| VALEUR du SEUIL | 4 ebs |
|---|---|

| | N° coéfficient | préfixe | information |
|---|---|---|---|
| COEFF | 1 | 1111110 | 101100 |
| | 2 | 110 | 11 |
| | 3 | 0 | |
| | 4 | 0 | |
| | 5 | 0 | |
| | 6 | 0 | |
| | 7 | 0 | |
| | 8 | 0 | |
| | 9 | 10 | 0 |
| | 10 | 110 | 01 |
| | 11 | 1110 | 011 |
| | 12 | 0 | |
| | 13 | 0 | |
| | 14 | 0 | |
| | 15 | 10 | 1 |
| | 16 | 1110 | 111 |
| CODC | 1 | | 1 |
| | 2 | | 1 |
| | 3 | 0 | |
| | 4 | 0 | |
| | 5 | 1 | 1 |
| | 6 | 1 | 1 |

# FIG.11

| 0 | 1 | 0 | 0 | 1 | 1 | 0 | 0 | 0 | 1 | 1 | 0 | 0 | 0 | 1 | 1 | Signe |

Décalage de l'échelle de quantification

Module

Restitution du bloc codé

## FIG.12

$$S = 0$$

$$S = S + 1$$

Calcul de
$$D_S = \Sigma_{i,j}\, (2n_{i,j} + 1) + K$$

Non

$$D_S \leq D_M$$

Oui

Valeur du seuil S

21